# EUROPÄISCHE PATENTSCHRIFT

(11) **EP 2 919 960 B1**
(45) Veröffentlichungstag und Bekanntmachung des Hinweises auf die Patenterteilung: **20.02.2019**
(21) Anmeldenummer: 13783571.6
(22) Anmeldetag: 28.10.2013
(51) Int. Cl.: B29C 47/10, B29C 47/04, B29B 9/14, B29C 47/02, B65H 69/00, B29C 65/00

(54) **VERFAHREN ZUR KONTINUIERLICHEN ZUFÜHRUNG UND VERBINDUNG VON STREIFEN- ODER BANDFÖRMIGEN FASERGEBILDEN ZU EINER SCHNECKENMASCHINE**
METHOD FOR CONTINUOUS SUPPLY AND CONNECTION OF STRIP- OR BAND-SHAPED FIBRE PRODUCTS TO A SCREW MACHINE
PROCÉDÉ D'AMENAGE ET ASSEMBLAGE EN CONTINU DE STRUCTURES FIBREUSES EN FORME DE BANDES OU RUBANS DANS UNE MACHINE À VIS SANS FIN

(30) Priorität: 15.11.2012 DE 102012022340
(43) Veröffentlichungstag der Anmeldung: 23.09.2015
(73) Patentinhaber: Thüringisches Institut Für Textil- Und Kunststoff- Forschung E.V., 07407 Rudolstadt (DE)
(72) Erfinder: REUßMANN, Thomas, 07407 Rudolstadt (DE); LÜTZKENDORF, Renate, 07426 Königsee (DE); ORTLEPP, Gerald, 07407 Uhlstädt-Kirchhasel (DE); DANZER, Martin, 93047 Regensburg (DE)
(74) Vertreter: Fritz, Edmund Lothar
(86) Internationale Anmeldenummer: PCT/EP2013/072522
(87) Internationale Veröffentlichungsnummer: WO 2014/075907

(56) Entgegenhaltungen:
- EP-A1- 1 375 103
- EP-A1- 2 206 591
- EP-A2- 1 757 552
- EP-A2- 2 390 212
- WO-A2-2009/148910
- CA-A1- 2 567 151
- US-A1- 2002 079 607

## Beschreibung

Die Erfindung betrifft ein Verfahren zur kontinuierlichen Zuführung und Verbindung von streifen- oder bandförmigen Gebilden aus endlichen Fasern zu einer Schneckenmaschine, wobei aus endlichen Fasern zunächst Streifen endlicher Länge mit einer definierten Breite und Flächenmasse oder Bänder mit definierter Feinheit erzeugt werden, die danach jeweils in einem geeigneten Gebinde abgespeichert werden.

Bei der Herstellung von faserverstärkten Compounds muss zur Sicherstellung eines störungsfrei laufenden Prozesses und zur Gewährleistung gleichmäßiger Eigenschaften des Compounds die Zuführung des Fasermaterials in einem kontinuierlichen Verfahren erfolgen. Gleichmäßige Eigenschaften des Compounds werden erreicht, wenn eine homogene Verteilung der Fasern über den Querschnitt vorliegt und der Fasergehalt im Compound konstant ist. Üblicherweise erfolgt das bisher mit definierten Aufmachungen des Fasermaterials (Kurzschnitt oder Rovings) kontinuierlich über Dosierwaagen oder durch den Direkteinzug von Rovings. Sollen jedoch andere Halbzeuge wie Faservliese, Bänder oder verfestigte Gelege aus Gebinden endlicher Länge an Extrusionsmaschinen zudosiert werden, ist stets die Frage der kontinuierlichen Zuführung des Materials zu lösen. Das erfordert einerseits eine geordnete und kontinuierliche Ablage (Speicherung) des Faserhalbzeuges in geeigneten Verpackungseinheiten und andererseits auch die Überbrückung bzw. Vermeidung von Abrissen oder Störungen durch Wechsel auf neue Gebinde oder Rollen. Das soll mit Hilfe der vorliegenden Erfindung gelöst werden.

Für die Zudosierung von Fasermaterialien an Schneckenmaschinen gibt es verschiedene technische Lösungen, die Stand der Technik sind. Bekannt ist beispielsweise der direkte Einzug von endlosen Fasersträngen in Schneckenmaschinen. (EP 0 124 003 B1, US2002/079607 A1, DE 42 36 662 C2). Bei diesem Verfahren wird das Verstärkungsfasermaterial durch eine seitliche Öffnung der Schneckenmaschine zugeführt und im Plastifizierzylinder mit der Polymerschmelze vermischt (DE 42 36 662 C2). Dabei muss das Verstärkungsfasermaterial in der Schneckenmaschine sowohl definiert verkürzt, als auch mit der Polymerschmelze vermischt und homogenisiert werden. Diese Variante der Faserdosierung erfordert endlose Verstärkungsfaserstränge (Rovings), die hohe Zugkräfte übertragen können. Die Rovings werden in der Regel direkt von Spulen abgezogen. Für einen kontinuierlichen Betrieb können mehrere Spulen miteinander verbunden werden (Anfang und Ende). Dadurch lassen sich Störungen im Materialfluss vermeiden.

Eine andere bekannte Möglichkeit zur kontinuierlichen Dosierung von endlich langen, voluminösen Fasern beschreibt das Patent DE 197 56 126. Bei diesem Verfahren werden zunächst mit Hilfe einer Krempelmaschine Hybridbänder aus einer Fasermischung von Verstärkungs- und Matrix-Stapelfasern hergestellt und in Kannen abgelegt. Dabei wird mit dem Mischungsverhältnis von Verstärkungs- und Matrixfasern der Fasergehalt eingestellt. Die Matrixfasern wirken in dem Faserband als Trägermaterial für die Verstärkungsfasern und ermöglichen so auch die Handhabung von schlecht rieselfähigen Verstärkungsfasern. Der Füllvorgang bei Plastifizier- oder Spritzgießmaschinen erfolgt durch die Rotation der Schnecke, wodurch die Hybridbänder in den Zylinder eingezogen werden. Die Einzugsgeschwindigkeit und dosierte Menge des Materials kann durch die Schneckendrehzahl, sowie Anzahl und Gewicht der Hybridbänder gesteuert werden. Nachteil bei dieser Variante der Faserdosierung ist allerdings die Herstellung der Faserbänder, die nicht für alle Fasermaterialien möglich ist und auch einen zusätzlichen kostenintensiven Arbeitsschritt darstellt. Außerdem sind die Zugfestigkeit, die Dichte und das Gewicht der Faserbänder sehr gering, was einen stabilen Verarbeitungsprozess erschwert und die gleichzeitige Verarbeitung vieler Faserbänder erfordert. Ein großes Problem bei dieser Variante ist vor allem die geringe speicherbare Materialmenge in den Kannen (10-20 kg). Dadurch müssen in sehr kurzen Abständen viele Kannen zugeführt und letztlich das Material permanent neu eingezogen werden. Das schränkt die praktische Anwendbarkeit dieses Verfahrens ein.

Ein weiteres Problem ist das Verbinden von Bandenden zur Gewährleistung eines kontinuierlichen Prozesses. Hierzu gibt es bekannte Lösungen, die aber nicht für die Anwendung an Schnecken- und Extrusionsmaschinen geeignet sind.
In der DE 39 02 451 A1 ist ein Verfahren zur Verbindung der Enden zweier streifenförmiger Metallfolien oder Filme beschrieben, bei dem ein zusätzlicher Hilfsstreifen verwendet wird, der die Verbindungsstelle überlappt und beide Folienstreifen werden jeweils mit diesem Hilfsstreifen durch Verschweißen verbunden. Für die Verbindung beider Enden der Folienstreifen wird hier somit zusätzliches Material verwendet und in dem entstehenden Stoßbereich hat aufgrund der Überlappung der verbundene Materialstreifen folglich eine größere Materialstärke.

In der DE 10 2008 010 424 A1 ist ein Faserstreifenverbinder für Bandwickler beschrieben, bei dem jeweils nur ein Faserstreifen zugeführt wird und wenn dieser zu Ende geht ein neuer Faserstreifen durch Verkleben mittels thermischer Aktivierung mit dem auslaufenden Faserstreifen verbunden wird. Diese Vorrichtung ist nur einsetzbar für Faserstreifen mit hoher Zugfestigkeit, da durch Umlenkungen in der Vorrichtung das Material stark auf Zug beansprucht wird. Bei der Zufuhr von Fasermaterialien zu Schneckenmaschinen können keine hohen Zugkräfte auf das Material aufgebracht werden, da dann das Faserband abreißt. Wenn wie hier nur jeweils ein Faserstreifen zugeführt wird, muss bei der Verknüpfung dessen Endes mit dem Anfang des neuen Faserstreifens die Verbindungsstelle die volle Zugkraft übertragen. In der genannten Druckschrift wird zudem so vorgegangen, dass während des Verbindungsprozesses die Maschine kurzzeitig stillsteht und somit der kontinuierliche Prozess unterbrochen wird.

Aus der DE 1 785 549 A ist ein Verfahren zum Verbinden zweier aufeinander liegender Werkstoffbahnen durch Vernadeln bekannt, wobei eine untere Werkstoffbahn aus Fasern thermoplastischer Kunststoffe besteht und eine obere Werkstoffbahn aus Textil, Leder oder Kunststoff besteht. Dabei werden Faserbüschel aus der unteren Werkstoffbahn mittels Nadeln, die Widerhaken aufweisen, durch die obere Werkstoffbahn hindurchgezogen. Die über die Oberfläche der oberen Werkstoffbahn vorstehenden einzelnen Faserbüschel werden zu nietkopfartigen Knoten zusammengeschmolzen und dadurch verankert. Durch diese nachgeschaltete "thermische Vernietung" der Faserbüschel wird ein hoher Zusammenhalt der Werkstoffbahnen erreicht. Bei der kontinuierlichen Zuführung und Verbindung von streifen- oder bandförmigen Gebilden aus endlichen Fasern zu einer Schneckenmaschine ist ein solcher hoher Zusammenhalt von Faserbahnen nachteilig. Vielmehr wird dabei angestrebt, dass die Verfestigung so gering wie möglich ist, um lediglich den Transport der Faserstreifen oder -bänder zur Schneckenmaschine zu gewährleisten, dabei aber sicherzustellen, dass eine spätere Auflösung der Verbindungsstelle im Extruder eintritt.

Der vorliegenden Erfindung liegt daher die Aufgabe zugrunde, ein Verfahren der eingangs genannten Art zu schaffen, welches eine kontinuierliche Zuführung von streifen- oder bandförmigen Fasergebilden an konventionellen Schneckenmaschinen (Extrudern) ermöglicht.

Erfindungsgemäß wird diese Aufgabe dadurch gelöst, dass mindestens zwei solcher streifenförmiger oder bandförmiger Gebilde aus verschiedenen Gebinden mit jeweils unterschiedlicher Lauflänge gleichzeitig abgezogen und kontinuierlich einem Extruder zugeführt werden und vor Ende der Lauflänge bzw. bei Abriss eines Streifens oder Bandes der Anfang eines bereitstehenden weiteren neuen Streifens oder Bandes mit dem noch laufenden Streifen oder Band automatisch verbunden und danach mit diesem in den Extruder eingezogen wird.

Die zunächst in einem Gebinde abgespeicherten Streifen oder Bänder werden somit anschließend einer Schneckenmaschine zugeführt. Durch das automatische Verbinden eines bereitstehenden weiteren neuen Streifens oder Bandes mit dem noch laufenden Streifen oder Band und danach folgendes gemeinsames Einziehen in den Extruder wird eine kontinuierliche Zuführung gewährleistet.

Im Gegensatz zum vorbeschriebenen Stand der Technik werden gemäß der vorliegenden Erfindung gleichzeitig mindestens zwei streifenförmige oder bandförmige Gebilde aus Fasern zugeführt. Wenn die Lauflänge eines dieser Faserbänder/Faserstreifen endet, läuft diejenige des zweiten Faserbandes/Faserstreifens noch weiter und zieht den angehefteten Anfang des dem ausgelaufenen Faserbandes/Faserstreifens nachfolgenden neuen Faserbandes/Faserstreifens mit. Dadurch kann die Verfestigung im Bereich der Anknüpfungsstelle sehr niedrig ausfallen. Dies hat den Vorteil, dass auch die Verbindungsstelle anschließend im Extruder durch die Scherwirkung der Schnecken wieder vollständig aufgelöst wird. Es wird aus diesem Grunde erfindungsgemäß eine vergleichsweise geringe Verfestigung im Verbindungsbereich zwischen zwei aufeinanderfolgenden Faserbändern/Faserstreifen bevorzugt.

Unter "streifenförmigen Gebilden" gemäß der eingangs gewählten Definition werden in der vorliegenden Anmeldung insbesondere Vliesstreifen verstanden.

Ein "Vliesstreifen" in diesem Sinne ist ein weicher Körper aus Anteilen endlicher Fasern und/oder Faserbündeln mit mittleren Längen von beispielsweise 10 bis 200 mm, vorzugsweise 30 - 70 mm, dessen geometrische Abmessungen im 3-dimensionalen Raum wie folgt definiert werden können: Länge (x-Richtung) >> Breite (y-Richtung) » Dicke (z-Richtung). Die Maße der Vliesstreifen und deren Flächengewicht werden der Größe und dem Durchsatz der Schneckenmaschine angepasst.

Der Verfestigungsgrad des Vliesstreifens in x-Richtung ist so ausgebildet, dass eine mechanische Zugbelastung nur die Bindekräfte der Fasern oder Faserbündel untereinander, jedoch nicht die Fasern zerstört. In Längsrichtung kann beispielsweise die Zugfestigkeit um mindestens etwa den Faktor 100 unter der Zugfestigkeit der darin enthaltenen Verstärkungsfasern liegen. Die Reißlänge des Vliesstreifens liegt bevorzugt in einem Bereich von etwa 5 m bis etwa 20 m. Die Reißlänge kann auch höher sein, wenn die Auflösbarkeit der Vliesstreifen dadurch nicht beeinträchtigt wird, z.B. bei thermisch verfestigten Vliesstreifen, insbesondere wenn die thermoplastische Komponente des Vliesstreifens mit dem Matrixmaterial in der Schneckenmaschine übereinstimmt bzw. einen gleichen Schmelztemperaturbereich besitzt. Die Reißlänge ist als diejenige Länge definiert, bei der der frei hängende Vliesstreifen durch seine eigene Gewichtskraft unter der irdischen Schwerkraftbeschleunigung g reißt. Der Vliesstreifen ist in z-Richtung so biegeverformbar, dass er aufgerollt oder auch mäanderförmig abgelegt werden kann.

Die miteinander verbundenen Vliesstreifen haben erfindungsgemäß einen vergleichsweise losen Zusammenhalt, der durch die vorgenannte Reißlänge definiert wird. Dadurch ist gewährleistet, dass die Vliesstreifen/Faserstreifen in der Schneckenmaschine problemlos durch die Scherkräfte wieder bis zur Einzelfaser aufgelöst werden können, um eine homogene Verteilung der Verstärkugnsfasern in der Matrix und später im Verbundwerkstoff oder Compound zu erhalten.

Die streifenförmigen Gebilde bestehen im Wesentlichen aus endlichen Verstärkungsfasern oder Verstärkungsfasergemischen. Sie werden insbesondere eingesetzt zur Herstellung von faserverstärkten Compounds, Verbundwerkstoffen, Granulaten und Formteilen. Im Falle von Recyclingfasern, z.B. Carbon-Recyclingfasern, können auch Fremdbestandteile wie z.B. Nähfadenanteile aus Glas oder Polyester enthalten sein. Möglich sind auch thermoplastische Faseranteile, um später im Extruder eine bessere Auflösung der Faserbänder zu erreichen.

Unter "bandförmigen Gebilden" gemäß der eingangs gewählten Definition werden in der vorliegenden Anmeldung insbesondere gekrempelte oder kardierte Faserbänder verstanden. Die Reißlänge der bandförmigen Gebilde liegt in einem Bereich von etwa 5 m bis etwa 20 m.

Die Vliesstreifen oder bandförmigen Gebilde können zur Verstärkung von Compounds verwendet werden.

Zur kontinuierlichen Dosierung des Fasermaterials am Extruder werden zunächst Vliesstreifen mit einer definierten Breite und Flächenmasse erzeugt, verfestigt und in geeigneter Art und Weise abgespeichert. Die Vliesherstellung kann über bekannte textile Techniken wie Krempeln, aerodynamische Vlieslegung oder andere Verfahren zur Herstellung von Flächengebilden aus endlichen Fasern erfolgen. Die Herstellung von Bändern erfolgt adäquat über Krempeln oder Kardieren. Das Abspeichern des Fasermaterials kann durch Wickeln, Täfeln, Falten usw. erfolgen. Als Gebinde für die Speicherung des Materials eignen sich Kartons, Kannen oder auch Rollen. Die Zuführung des Fasermaterials an der Schneckenmaschine erfolgt durch Einzug von mindestens einem Doppel-Streifen oder -Band direkt über eine oder mehrere Plasifizierschnecken oder über die Dosierschnecken einer seitlichen Dosierung (ZSB). Dabei ist zur Erzielung eines kontinuierlichen Prozesses die schnelle und sichere Verbindung der Enden der Gebinde von großer Bedeutung. Auch plötzliche Abrisse während der Zuführung der Streifen oder Bänder nach Verlassen der Gebinde müssen überbrückt werden. Das wird erfindungsgemäß durch Verfestigen der Übergangsbereiche derart realisiert, dass wenn über einen geeigneten Sensor das Ende eines Streifens oder Bandes registriert wird, eine Verfestigungseinrichtung den Anfang eines bereitstehenden Fasergebildes mit dem noch laufenden Fasergebilde verbindet und somit einen endlosen Materialfluss ermöglicht.

Die Verfestigung im Übergangsbereich kann bevorzugt durch Vernadeln, Verschweißen, Vernähen, Verkleben oder andere geeignete Verfestigungsverfahren erfolgen.

Eine bevorzugte Weiterbildung der Erfindung sieht vor, dass wenigstens ein Sensor je laufenden streifenförmigen Gebilde vorhanden ist, der das Ende der Lauflänge oder den Abriss eines der Streifen oder Bänder detektiert und bei Detektion eine Bandverbindungseinheit aktiviert, die den auslaufenden Vliesstreifen mit einem neuen Vliesstreifen verbindet.

Eine bevorzugte Weiterbildung der Erfindung sieht vor, dass das Abspeichern der Vliesstreifen endlicher Länge durch Wickeln, Täfeln oder Falten erfolgt und als Gebinde für die Abspeicherung Kartons, Kannen oder Rollen vorgesehen sind, aus denen die Vliesstreifen abgezogen werden.

Eine bevorzugte Weiterbildung der Erfindung sieht vor, dass neben den beiden Vliesstreifen oder Bändern, die gleichzeitig aus ihren jeweiligen Gebinden abgezogen werden, wenigstens zwei weitere neue Vliessstreifen oder Bänder aus zwei weiteren Gebinden bereitstehen.

Eine bevorzugte Weiterbildung der Erfindung sieht vor, dass die Bandverbindungseinheit relativ zur, vorzugsweise etwa quer zur Einzugsrichtung der Vliesstreifen oder Bänder beweglich ist.

Eine bevorzugte Weiterbildung der Erfindung sieht vor, dass gleichzeitig mindestens zwei Vliesstreifen oder Bänder unterschiedlicher Breite und/oder unterschiedlicher Flächenmasse und/oder unterschiedlicher Zusammensetzung hinsichtlich ihrer jeweiligen Faserbestandteile eingezogen werden.

Eine bevorzugte Weiterbildung der Erfindung sieht vor, dass die Vliesstreifen oder Bänder direkt über eine oder mehrere Plastifizierschnecken oder über die Dosierschnecken einer seitlichen Dosierung dem Extruder zugeführt werden.

Eine bevorzugte Weiterbildung der Erfindung sieht vor, dass die Breite der Flächengebilde in einem Bereich von 10 bis 600 mm liegt.

Eine bevorzugte Weiterbildung der Erfindung sieht vor, dass die Flächenmasse der Flächengebilde in einem Bereich von 50 bis 5000 g/m² liegt.

Eine bevorzugte Weiterbildung der Erfindung sieht vor, dass Bänder von 2-20ktex Bandfeinheit eingesetzt werden.
Die Anzahl der zugeführten Streifen oder Faserbänder wird so gewählt, dass in Abhängigkeit von der Einzugsgeschwindigkeit der Schneckenmaschine ein Fasermassestrom von 10 - 200 kg/h resultiert.

Eine bevorzugte Weiterbildung der Erfindung sieht vor, dass die Fasergebilde aus Naturfasern oder Chemiefasern oder anderen Faserstoffen auf organischer oder anorganischer Basis bestehen. Es können beispielsweise recycelte Fasern der genannten Art verwendet werden. Die einzelnen erfindungsgemäßen Fasergebilde können beispielsweise auch aus einer Mischung unterschiedlicher Fasern bestehen.

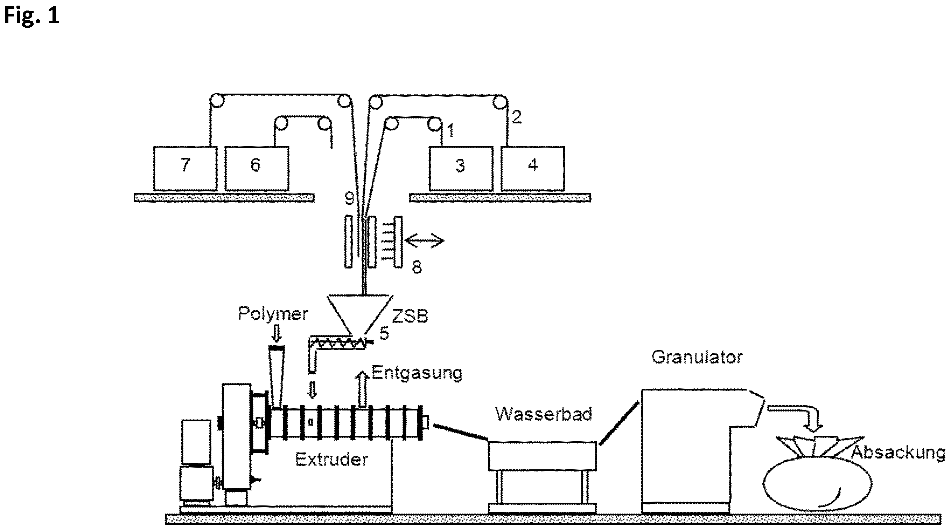

Eine bevorzugte Ausführungsform der Erfindung ist in Fig.1 dargestellt.

2 Vliesstreifen (1, 2) werden aus unterschiedlichen Gebinden (3, 4) in eine Dosierschnecke ZSB (5) eingezogen. Parallel dazu stehen mindestens 2 Gebinde (6, 7) des gleichen Materials in Bereitschaft. Die Lauflänge der Vliese ist unterschiedlich, damit nicht bei allen Gebinden das Ende der Vliesstreifen gleichzeitig auftritt. Alle Vliesstreifen werden mit geeigneten Sensoren überwacht, die einen Abriss oder das Ende des Materials registrieren. Wird ein Materialabriss detektiert, kann eine Bandverbindungseinheit (8) aktiviert werden, die den Anfang eines bereitstehenden Vliesstreifens (9) mit dem noch laufenden Material verknüpft. Dadurch wird nach einem Abriss das neue Material mit der noch laufenden Bahn eingezogen und es kann ein kontinuierlicher Materialfluss gewährleistet werden. In einer bevorzugten Form werden die Vliesstreifen im Übergangsbereich vernadelt. Dadurch lässt sich eine ausreichende Verfestigung erzielen. Die Verbindung darf nur so fest sein, dass die Übergangsstelle im Extruder durch die Scherwirkung der Schnecken wieder aufgelöst werden kann.

### Ausführungsbeispiel 1

2 Vliesstreifen mit einer Breite von 100 mm und einer Flächenmasse von 200 g/m² werden aus unterschiedlichen Gebinden in eine Dosierschnecke ZSB eingezogen. Parallel dazu stehen 2 Verpackungseinheiten mit dem gleichen Material in Bereitschaft. Die Lauflänge der Vliese ist unterschiedlich, damit nicht bei allen Gebinden das Ende der Vliesstreifen gleichzeitig auftritt. Die Vliesstreifen werden mit geeigneten Sensoren überwacht, die einen Abriss oder das Ende des Materials registrieren. Bei Detektion eines Materialabrisses wird die Bandverbindungseinheit aktiviert. Der Anfang des bereitstehenden Vliesstreifens wird mit dem noch laufenden Material durch einen Hub mit 5 Einstichen/cm² vernadelt. Dadurch wird das neue Material mit der noch laufenden Bahn eingezogen und es kann ein kontinuierlicher Materialfluss gewährleistet werden.

### Ausführungsbeispiel 2

2 Vliesstreifen mit einer Breite von 80 mm und einer Flächenmasse von 300 g/m² werden aus unterschiedlichen Gebinden in eine Dosierschnecke ZSB eingezogen. Parallel dazu stehen 2 Verpackungseinheiten mit dem gleichen Material in Bereitschaft. Die Lauflänge der Vliese ist unterschiedlich, damit nicht bei allen Verpackungseinheiten das Ende der Vliesstreifen gleichzeitig auftritt. Die Vliesstreifen werden mit geeigneten Sensoren überwacht, die einen Abriss oder das Ende des Materials registrieren. Bei Detektion eines Materialabrisses wird die Bandverbindungseinheit aktiviert. Der Anfang des bereitstehenden Vliesstreifens wird mit dem noch laufenden Material durch einen Hub mit 10 Einstichen/cm² vernadelt. Dadurch wird das neue Material mit der noch laufenden Bahn eingezogen und es kann ein kontinuierlicher Materialfluss gewährleistet werden.

### Bezugszeichenliste Fig. 1

- 1: Vliesstreifen 1
- 2: Vliesstreifen 2
- 3: Gebinde 1
- 4: Gebinde 2
- 5: Dosierschnecke ZSB
- 6: Gebinde 3
- 7: Gebinde 4
- 8: Verbindungseinheit
- 9: Bereitstehender Vliesstreifen

## Patentansprüche

1. Verfahren zur kontinuierlichen Zuführung und Verbindung von streifen- oder bandförmigen Gebilden aus endlichen Fasern zu einer Schneckenmaschine, wobei aus endlichen Fasern zunächst Streifen endlicher Länge mit einer definierten Breite und Flächenmasse oder Bänder mit definierter Feinheit erzeugt werden, die danach jeweils in einem geeigneten Gebinde abgespeichert werden, **dadurch gekennzeichnet, dass** mindestens zwei solcher streifenförmiger oder bandförmiger Gebilde (1, 2) aus verschiedenen Gebinden (3, 4) mit jeweils unterschiedlicher Lauflänge gleichzeitig abgezogen und kontinuierlich einem Extruder zugeführt werden und bei Ende der Lauflänge oder bei Abriss eines Streifens oder Bandes der Anfang eines bereitstehenden weiteren neuen Streifens (9) oder Bandes mit dem noch laufenden Streifen oder Band automatisch verbunden und danach mit diesem in den Extruder eingezogen wird.

2. Verfahren nach Anspruch 1, **dadurch gekennzeichnet, dass** die Verbindung des noch laufenden Streifens oder Bandes mit dem neuen Streifen (9) oder Band durch Vernadeln, Verschweißen, Vernähen oder Verkleben erfolgt.

3. Verfahren nach Anspruch 1 oder 2, **dadurch gekennzeichnet, dass** wenigstens ein Sensor vorgesehen ist, der das Ende der Lauflänge oder den Abriss eines der Streifen oder Bänder (1, 2) detektiert und bei Detektion eine Bandverbindungseinheit (8) aktiviert, die den noch laufenden Streifen oder das noch laufende Band mit einem neuen Streifen (9) oder Band verbindet.

4. Verfahren nach einem der Ansprüche 1 bis 3, **dadurch gekennzeichnet, dass** das Abspeichern der Streifen endlicher Länge durch Wickeln, Täfeln oder Falten erfolgt und als Gebinde für die Abspeicherung Kartons, Kannen oder Rollen vorgesehen sind, aus denen die Vliesstreifen oder Bänder abgezogen werden.

5. Verfahren nach einem der Ansprüche 1 bis 4, **dadurch gekennzeichnet, dass** neben den beiden Vliesstreifen oder Bändern (1, 2), die gleichzeitig aus ihren jeweiligen Gebinden (3, 4) abgezogen werden, wenigstens zwei weitere neue Vliesstreifen oder Bänder aus zwei weiteren Gebinden (6, 7) bereitstehen.

6. Verfahren nach einem der Ansprüche 1 bis 5, **dadurch gekennzeichnet, dass** die Bandverbindungseinheit (8) relativ zur, vorzugsweise etwa quer zur Einzugsrichtung der Vliesstreifen oder Bänder (1, 2) beweglich ist.

7. Verfahren nach einem der Ansprüche 1 bis 6, **dadurch gekennzeichnet, dass** gleichzeitig mindestens zwei Vliesstreifen oder Bänder (1, 2) unterschiedlicher Breite und/oder unterschiedlicher Flächenmasse und/oder unterschiedlicher Zusammensetzung hinsichtlich ihrer jeweiligen Faserbestandteile eingezogen werden.

8. Verfahren nach einem der Ansprüche 1 bis 7, **dadurch gekennzeichnet, dass** die Vliesstreifen oder Bänder direkt über eine oder mehrere Plasifizierschnecken oder über die Dosierschnecken einer seitlichen Dosierung dem Extruder zugeführt werden.

9. Verfahren nach einem der Ansprüche 1 bis 8, **dadurch gekennzeichnet, dass** die Breite der streifenförmigen Gebilde in einem Bereich von 10 bis 600 mm liegt.

10. Verfahren nach einem der Ansprüche 1 bis 9, **dadurch gekennzeichnet, dass** die Flächenmasse der streifenförmigen Gebilde in einem Bereich von etwa 50 bis etwa 5000 g/m² liegt.

11. Verfahren nach einem der Ansprüche 1 bis 10, **dadurch gekennzeichnet, dass** Bänder von etwa 2 - 20 ktex Bandfeinheit eingesetzt werden.

## Claims

1. Method for the continuous feeding and connecting of strip-like or ribbon-like structures made of fibres of finite length to a screw machine, wherein strips of finite length with a defined width and grammage or ribbons of defined yarn weight numbering are first made from fibres of finite length, and are subsequently each stored in a suitable container, **characterized in that** at least two such strip-like or ribbon-like structures (1, 2), each with different run lengths are drawn out of different containers (3, 4) simultaneously and fed continuously to an extruder, and at the end of the run length or when there is a break in a strip or ribbon another new strip (9) or ribbon is automatically connected to the strip or ribbon that is still running and then drawn into the extruder therewith.

2. Method according to Claim 1, **characterized in that** the strip or ribbon that is still running is connected to the new strip (9) or ribbon by needling, welding, sewing or gluing.

3. Method according to Claim 1 or 2, **characterized in that** at least one sensor is provided which detects the end of the run length or a break in one of the strips or ribbons (1, 2) and upon detection a ribbon connecting unit (8) is activated which connects the strip that is still running or the ribbon that is still running with a new strip (9) or ribbon.

4. Method according to any one of Claims 1 to 3, **characterized in that** the strips of finite length are stored by winding, panelling or folding and are provided in the form of containers for holding cartons, cans or rolls from which the non-woven strips or ribbons are drawn off.

5. Method according to any one of Claims 1 to 4, **characterized in that** besides the two non-woven strips or ribbons (1, 2) which are drawn out of their respective containers (3, 4) at least two further new non-woven strips or ribbons from two further containers (6, 7) are ready for use at the same time.

6. Method according to any one of Claims 1 to 5, **characterized in that** the ribbon connecting unit (8) is movable relative to, and preferably approximately transversely to the feed direction of the non-woven strips or ribbons (1, 2).

7. Method according to any one of Claims 1 to 6, **characterized in that** at least two non-woven strips or ribbons (1, 2) of different width and/or different grammage and/or different composition in terms of their respective fibre components are drawn in simultaneously.

8. Method according to any one of Claims 1 to 7, **characterized in that** the non-woven strips or ribbons are fed to the extruder directly via one or more plasticizing screws or via the dosing screws of a lateral metered dispensing unit.

9. Method according to any one of Claims 1 to 8, **characterized in that** the width of the strip-like structures is in a range from 10 to 600 mm.

10. Method according to any one of Claims 1 to 9, **characterized in that** the grammage of the strip-like structures is in a range from about 50 to about 5000 g/m².

11. Method according to any one of Claims 1 to 10, **characterized in that** ribbons with yarn weight numbering from about 2-20 g/m (ktex) are used.

## Revendications

1. Procédé destiné à alimenter en continu et à assembler des structures en forme de rubans ou de bandes en fibres discontinues vers une machine à vis sans fin, à partir de fibres discontinues étant d'abord créées des rubans discontinus d'une longueur donnée et d'une largeur et d'un grammage définis ou des bandes d'un titre défini, que l'on conserve ensuite dans un propre contenant, **caractérisé en ce qu'**on retire simultanément au moins deux structures (1, 2) de ce type en forme de ruban ou en forme de bande de différents contenants (3, 4), avec chaque fois une différente longueur courante et on les alimente en continu vers une extrudeuse et à la l'atteinte de la longueur courante ou lors du déchirement d'un ruban ou d'une bande, on assemble automatiquement le début d'un nouveau ruban (9) ou d'une nouvelle bande supplémentaire disponible avec le ruban ou la bande encore en déroulement et on le tire ensuite avec celui-ci ou celle-ci dans l'extrudeuse.

2. Procédé selon la revendication 1, **caractérisé en ce que** l'assemblage du ruban ou de la bande encore en déroulement avec le nouveau ruban (9) ou la nouvelle bande s'effectue par aiguilletage, par soudage, par couture ou par collage.

3. Procédé selon la revendication 1 ou 2, **caractérisé en ce qu'**il est prévu au moins un capteur qui détecte la fin de la longueur courante ou le déchirement de l'un des rubans ou de l'une des bandes (1, 2) et lors de la détection, active une unité d'assemblage de bande (8) qui assemble le ruban encore en déroulement ou la bande encore en déroulement avec un nouveau ruban (9) ou une nouvelle bande.

4. Procédé selon l'une quelconque des revendications 1 à 3, **caractérisé en ce que** le stockage du ruban de longueur donnée s'effectue par bobinage, par lambrissage ou par pliage et **en ce que** sont prévus en tant que contenants pour le stockage des cartons, des cannettes ou des rouleaux, à partir desquel(le)s on retire les rubans de non-tissé ou les bandes.

5. Procédé selon l'une quelconque des revendications 1 à 4, **caractérisé en ce que** parallèlement aux rubans de non-tissé ou aux bandes (1, 2) que l'on retire simultanément de leurs contenants (3, 4) respectifs, au moins deux nouveaux rubans de non-tissé ou bandes sont tenus à disposition à partir de deux contenants (6, 7) supplémentaires.

6. Procédé selon l'une quelconque des revendications 1 à 5, **caractérisé en ce que** l'unité d'assemblage de bande (8) est mobile par rapport à, de préférence approximativement à la transversale de la direction de rentrée des rubans de non-tissé ou des bandes (1, 2).

7. Procédé selon l'une quelconque des revendications 1 à 6, **caractérisé en ce qu'**on fait rentrer au moins deux rubans de non-tissé ou bandes (1, 2) de différente largeur et/ou de différent grammage et/ou de différente composition au niveau de leurs composants fibreux respectifs.

8. Procédé selon l'une quelconque des revendications 1 à 7, **caractérisé en ce qu'**on alimente dans l'extrudeuse les rubans de non-tissé ou les bandes directement via une ou plusieurs vis sans fin de plastification ou via une vis sans fin de dosage d'un système de dosage latéral.

9. Procédé selon l'une quelconque des revendications 1 à 8, **caractérisé en ce que** la largeur des structures en forme de rubans se situe dans un ordre de 10 à 600 mm.

10. Procédé selon l'une quelconque des revendications 1 à 9, **caractérisé en ce que** le grammage des structures en forme de rubans se situe dans un ordre d'environ 50 à environ 5000 g/m².

11. Procédé selon l'une quelconque des revendications 1 à 10, **caractérisé en ce qu'**on utilise des bandes d'un titre de bande d'environ 2 à 20 ktex.
